(19) Europäisches Patentamt

European Patent Office

Office européen des brevets

(11) EP 1 268 663 B1

(12) **EUROPEAN PATENT SPECIFICATION**

(45) Date of publication and mention
of the grant of the patent:
**16.08.2006 Bulletin 2006/33**

(21) Application number: **01911724.1**

(22) Date of filing: **02.03.2001**

(51) Int Cl.:
*C08L 53/02* (2006.01)        *C08L 31/04* (2006.01)
*C08L 25/04* (2006.01)        *C08L 15/02* (2006.01)
*A43B 13/18* (2006.01)

(86) International application number:
**PCT/EP2001/002403**

(87) International publication number:
**WO 2001/064787 (07.09.2001 Gazette 2001/36)**

(54) **POLYMER COMPOSITION**

POLYMER-MASSE

COMPOSITION POLYMERE

(84) Designated Contracting States:
**AT BE CH CY DE DK ES FI FR GB GR IE IT LI LU
MC NL PT SE TR**

(30) Priority: **02.03.2000 DE 10010182**

(43) Date of publication of application:
**02.01.2003 Bulletin 2003/01**

(73) Proprietor: **adidas International Marketing B.V.
1062 KR Amsterdam (NL)**

(72) Inventor: **KNOERR, Klaus
91094 Langensendelbach (DE)**

(74) Representative: **Hess, Peter K. G. et al
Patent- und Rechtsanwälte
Bardehle . Pagenberg . Dost .
Altenburg . Geissler
Postfach 86 06 20
81633 München (DE)**

(56) References cited:
**EP-A- 0 904 706          EP-A- 0 947 145
US-A- 3 576 911          US-A- 4 216 131
US-A- 4 418 483          US-A- 4 476 180
US-A- 4 546 127          US-A- 4 616 065
US-A- 4 640 797**

Remarks:
The file contains technical information submitted after
the application was filed and not included in this
specification

**Description**

**1. Technical field**

The invention is related to a viscous polymer composition, a process for producing said viscous polymer composition, a composite comprising said viscous polymer composition, shoe soles comprising said viscous polymer composition or said composite, respectively, as well as the use of the viscous polymer composition or of the composite, respectively, for producing bodies, in particular shoe soles.

**2. Grounds of the invention**

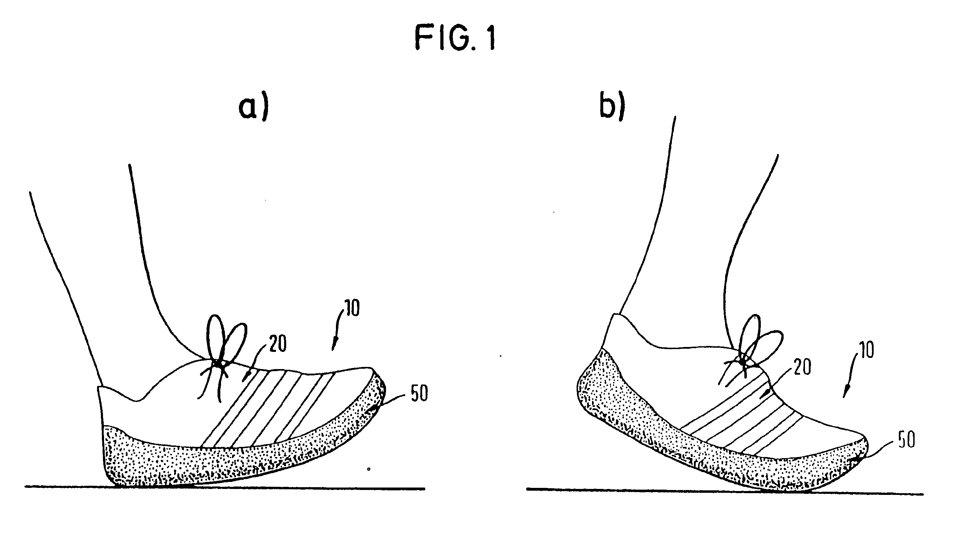

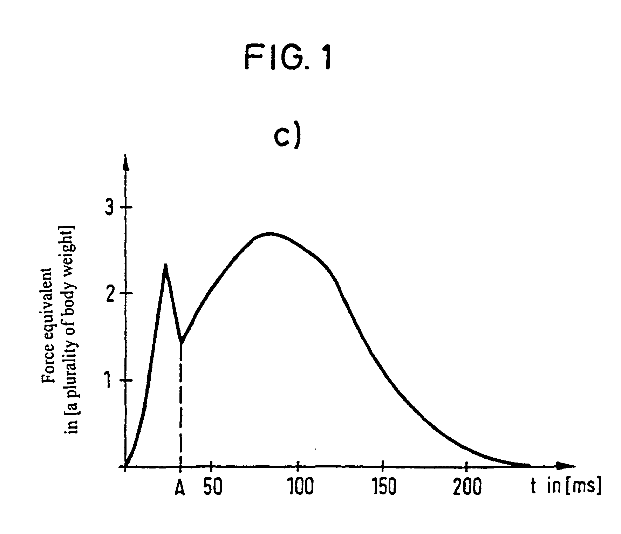

By contacting the ground during walking, running or jumping forces are acting between the ground and the foot. The name of said forces are usually ground reaction forces (GRF). It can be determined with suitable measuring devices. The order of magnitude of GRF is usually 1 - 1,5 times the body weight (BW) of the athlete. During running the forces are 2 - 3 BW and during jumping forces of 5 and 10 BW were measured. The force-time-pattem shows in each kind of foot ground interaction two different phases. A hitting phase a) in the moment when the foot hits the ground, followed by a push phase b), whereby the athlete pushes himself in a forward and upper direction. Figure la shows the landing movement of a foot during long distance running. Approximately 80% of all runners contact the ground with the heel first. Figure 1b shows the subsequent pushing with the middle and front foot. The resulting vertical component of the GRF is depicted in Figure 1c. According to this Figure, the curve shows two significant force maximum. The first maximum appears after 20 - 30 milliseconds (ms) caused by the hit of the heel. In the literature said force maximum is usually referred as "impact-force-maximum" since the human body does not react and adapt during said short interval. The second force maximum appears after 60 ms to 80 ms and is caused by the push. Said force-maximum is usually referred as "active-force-maximum" or "push-force-maximum".

Said two kind of forces have different consequences with respect to the bone- and muscle-system:

Impact-forces do nothing to the forces of the athlete. Impact-forces have been considered to be relevant with respect to chronic and degenerative injures of several sports, in particular when the heel is involved. It is therefore one object, to reduce impact-forces by employing suitable constructions for shoe soles. Systems are intended, which easily deform under force and also disperse the energy.

The amount and the duration of the active forces determine the performance of the athlete, i.e. the running force and the jump heights. This means that a certain niveau of active forces has to be saved, when the athlete intends to run a certain speed. It is therefore intended to support such forces. A shoe sole can influence this, which minimizes the energy dispersion as much an possible and generates the necessary suppression at the same time.

Studies have proved that depending on the sport, running speed, anatomic form of the feet, etc. the relative height of the passive and active maximum to each other can vary. Therefore, depending on each single case the situation depicted in Figure 1c can vary in a way that the active maximum has the same amount as the passive maximum or can also become bigger. However, it is the usual case that the maxima differ by approximately 60 ms.

With regard to the suppression systems in sport industry, the following solutions can be obtained from the state in the art:

From US-A-5 695 850 a concept is known when a sport shoe is applied with a sole part, which should increase the performance of said shoe. This should be obtained by employing shoe- or sole components, respectively, which "regain" the energies, which occur during running and convert said energies in the push phase from the ground (also in the area of the active maximum in Figure 1c) in a forward movement. For this reason the use of elastic materials either in the whole sole area or limited to the front foot area is disclosed. Suitable elastic materials like 1,4-polybutadiene/ rubber, or- as a shoe inlet - a mixture of EVA and natural rubber are suggested.

From DE 87 09 757 a sole unit is known, consisting in a running sole and a intermediate sole, being fixed thereon. The intermediate sole is defined by a relatively small, frame-like circulating strip, which defines a unit, which is closed on its lower end by the running sole. Said unit carries two sole parts. One of those sole parts starts at the front foot area and ends at the beginning of the heel, where the second sole part is located. It is preferred that the first sole part consists in a polymer support inlet which has a relative high elasticity when pressure is Applied, in a way that during walking with said shoe a foot bed can result on the sole part, which guarantees a certain comfort. The sole part which is located in the heel area builds a shock absorber and consists in shock absorbent, viscous material like silicone.

In a similar way US-A-4,910,886 describes the use of shock absorbing inlets made of viscous material in the heel area of a sole unit.

US-A-4,316,335 discloses the use of a viscous shock absorbing material in the front part of a sole as well as in the heel part, wherein the shock absorbing properties in the heel part should be better.

Furthermore, in US-A-4,418,483 a shoe sole is disclosed, wherein in a layer composition the viscous material which is a polymer composition is implied as one possible layer. Said polymer composition consists in a cross-linked ethylenevinylacetate copolymer (referred as EVA) and for increasing the tensile strength and other material properties, for example styrene-butadiene-rubber. Furthermore, in said polymer composition silica gel is implied as a filler and furthermore the usual aids for cross-linked rubber are used.

The above described known concepts have the drawback in common that the viscous material suggested therein are not adapted or optimized, respectively, or the above discussed time behavior of the passive and active force maximum in the heel area. For this reason, the desired effect is only unsatisfyingly accomplished and a "fuzzy" or "bouncing" feeling results during running. This causes a significant drawback in efficiency and safety of the forward movement of the runner who uses the shoe.

The US 4,616,065 discloses a rubbery high trans-high vinyl diblock copolymers, blends of rubbery high trans copolymers and rubbery high vinyl polymers, and mixtures (alloys or blends) of said diblock copolymers, high trans copolymers and high vinyl polymers are useful in producing tire treads exhibiting good processibility, good rolling resistance, skid resistance and abrasion resistance. The high trans block or copolymer comprises a copolymer of butadiene-1,3 and styrene and/or isoprene and the high vinyl block or polymer comprises polybutadiene or copolymers of butadiene and styrene and/or isoprene.

The US 4,546,127 discloses the preparation of a soft, low-resilience, cured rubber composition by mixing (a) 100 parts by weight of a polymeric material comprising a styrene-butadiene copolymer or styrene-butadiene copolymer mixture having a styrene content of 53 to 75% by weight, and 0 to 40% by weight of the polymeric material of another rubber ingredient, (b) 30 to 300 parts by weight of a filler, and (c) 5 to 100 parts by weight of a plasticizer, adding effective amounts of a vulcanizing agent and a vulcanizing accelerator to the mixture, and then heat curing the mixture.

### 3. Summary of the invention

The object of the present invention is to provide a viscous material, in particular suitable for the passive and active force maximum occurring during the natural movement and which optimally uses a natural movement dynamic and thus provides a safe and efficient forward movement of the runner.

Moreover, it is desired that the viscous material can be used without bigger adaptations in known plants for producing shoe soles in a efficient and cheap manner.

According to the present invention the above objects are solved by a viscous polymer composition, which comprises and in particular contains:

D) a bromine comprising polymer D, obtainable from at least one $C_4$ - to $C_{10}$-diene and at least one bromine; and at least one of the components

A) a polymer A, obtainable of at least a

A1) $C_4$- to $C_{10}$-diene as monomer A1 and
A2) vinylaromatic $C_8$- to $C_{20}$-monomer as a monomer A2;

*wherein the polymer A is a block copolymer and wherein in polymer A a block obtainable from monomer A is surrounded from the blocks of polymer A2;*
or

B) a polymer B, obtainable of at least

B1) $C_2$ - to $C_{20}$-olefin as a monomer B1, and

B2) a monomer from a $C_2$ - to $C_{10}$-vinylalcohol and $C_2$ - to $C_{10}$-carboxylic acid as monomer B2;

optionally

C) a polymer C, obtainable from at least one vinylaromatic monomer; and

E) a filler

Furthermore, the polymer composition according to the invention can contain the usual aids and additional compounds as for example to simplify removing the polymer composition from a mould.

## 4. Detailed description of the invention

All possible combinations of the component A with the components B - E are preferred according to the present invention. Furthermore, the component B can be combined with the components C to E. In particular preferred combinations of the components are given by the following letter combinations: AB, AC, AD, AE, AEC, ABCD, BC, ABC, ABCDEF and ABCDE.

Furthermore, the viscous polymer composition is preferred, which contains components:

A) 0 to 99.9 wt-% polymer A, preferably 5 to 60 wt-%,
B) 0 to 99.9 wt-% polymer B, preferably 5 to 60 wt-%,
C) 0 to 99.9 wt-% polymer C, preferably 5 to 60 wt-%,
D) 0 to 90.4 wt-% polymer D, preferably 5 to 50 wt-%,
E) 0 to 40 wt-% fillers as component E, preferably 1 to 20 wt-%,

wherein the sum of components A - E yields 100 wt-% and wherein the polymer composition always contains at least one of the two components A and B and if it contains A or B, it contains at least one further component C to E

The amount of component F if present is up to 15 wt-%, preferred from 0.5 to 5 wt-% in relation to the remaining polymer composition.

According to the present invention preferably $C_4$-$C_8$- and in particular preferred $C_4$-$C_6$- and moreover preferred $C_4$-$C_5$-dienes are employed as monomer A1. $C_4$-$C_5$-dienes are preferably butadiene and isoprene, wherein butadiene is in particular preferred.

Particularly $C_8$-$C_{15}$- and particularly preferred $C_8$-$C_{10}$-monomers are employed as monomer A2. $\alpha$-methylstyrene and styrene are preferred and styrene is in particular preferred.

Polymer A is a block polymer, which comprises at least one block of monomer A1 and one block of monomer A2. It is a three block copolymer with on block of monomer A2 followed from one block of monomer A1 again followed by one block of monomer A2. A poly-(styrene-butadiene-styrene)-block copolymer as for example available under the trade name Styroflex® by BASF AG is in particular preferred.

Such poly-(styrene-butadiene-styrene)-blockcopolymers consist of "islands" of polystyrene as a hard fiber which are bedded in a matrix of rubber-like statistical styrene-butadiene-copolymer which makes the material flexible. Typically, these materials have a shore A-hardness (3s)15s, according to DIN 53505 in a range of (85 to 90) or 80 to 85 respectively. The shore D-hardness (3s)15s, measured according to DIN 53505, is in a range of (30 to 35) or 27 to 32 respectively. Furthermore, such materials have a low glass transition temperature in the range around -40°C and a breaking temperature (according to DIN 53372) in a range of approximately -35°C. Further information about this material is given in the data sheets concerning Styroflex®, obtainable from BASF AG, Ludwigshafen.

Polymer B is a copolymer at least formed from the monomers B1 and B2.

The monomer B1 is preferably a $C_2$- to $C_{20}$- more preferably a $C_2$- to $C_{15}$- and in particular preferable $C_2$- to $C_{10}$-olefin. It is moreover preferred that monomer B1 is an alpha-olefin. In particular ethylene, propylene, 1-butene, 1-pentene, 1-hexene, 1-heptene, 1-octene and 1-nonene are preferred and ethylene as in particular preferred.

Monomer B2, being further employed in polymer B, is the product that is for example obtainable from a vinyl alcohol, in particular with 2 to 8 and more particular with 2 to 5 and even more particular with 2 carbons and a carboxylic acid with particular 2 to 8 and more particular 2 to 5 and even more particular 2 carbon atoms.

Polymer B can contain polymer B2 in a range from 5 to 25 and particular from 15 to 23 wt-%.

Particular preferred as polymer B is EVA(ethylene-vinylacetate)-polymer with a vinyl acetate content of 18 to 21 wt-%, based on the total polymer B in the viscous polymer composition according to the present invention. This EVA-polymer is supplied for example by Leuna Polymer GmbH, DuPont or Exxon.

Within this group of polymers, the content of vinylacetate as well as the melting index of the copolymerisation determine amongst others the mechanical and thermal properties of the polymer. With increasing content of vinylacetate, elongation, tension-tear stability, flexibility, cold resistance, rebound elasticity, tolerance and stickyness increase whereas hardness, stiffness, elasticity, vica temperature, bending stress and resistance towards chemicals decrease.

Further details concerning the properties and the composition of commercially available polymers B, especially of EVA polymers can be obtained from the corresponding data sheet of the above mentioned companies, like for example the data sheets regarding the product Miravithen® of Fa. Leuna Polymer GmbH and Elvax® of DuPont.

Polymer C is a polymer, obtainable from at least one vinylaromatic monomer, like for example styrene. Generally, such polymers are liquid in a temperature range from -10 to 100°C. Preferably, polymer C is liquid in a range from 0 to 70°C, especially preferred from 10 to 50°C. Regarding a $C_4$ to $C_{10}$-diene, reference is made to the explanation concerning monomer A1.

The halogens in polymer D are preferably fluorine, chlorine and bromine and in particular preferred bromine. With regard to the conjugated dienes employed in polymer D reference is made to monomer B1. In polymer D bromo

butadiene, bromo isoprene are preferred and bromo butadiene is in particular preferred. Accordingly, poly bromo butadiene rubber is in particular preferred as polymer D.

As examples for materials which can be used as a polymer D, brominated copolymers of isobutene and isoprene have to be mentioned, which are availabel for example under the name Polysar® of Fa. Bayer AG. Further details regarding such polymers which can be used as polymer D are provided in the corresponding data sheet of Fa. Bayer AG.

As filler E all fillers know by the person skilled in the art can be used. Generally, fillers can be divided in inorganic and organic fillers. According to the present invention inorganic fillers are preferred. Said fillers particularly base on Si wherein silicon oxide are more preferred and silica is mostly preferred. Besides increasing the stability the use of fillers also increases the abrasion resistance of the viscous polymer composition.

Further fillers to be mentioned are for example: soot, calcium and aluminium silicates, aluminium oxide, kaolin, silica, french chalk, chalk and metal oxides, like for example zinc oxide and metal carbonates.

Above this, all known inorganic and organic pigments can be used as fillers, wherein pigments of titan oxide, zinc sulfide, iron oxide, chromium oxide, cadmium and chromate are preferred as inorganic pigments, and as organic pigments are especially preferred: diarylic- and pyrazolon-diazopigments, pigments of the β-naphtholcarboxylic acid or β-naphtholcarboxylic acid-arylits, derivatives of naphthalenetetracarboxylic acid or derivatives of peryleneteracarboxylic acid, pigments of dioxazine as well as pigments of chinacridon condensation products, thioindigo-isoindolinone condensation products and diazo condensation products.

Component F are aids and additional compounds which are well-known to the person skilled in the art. Aids are in particular activators, inhibitors, plasticizers, cross-linkers, separating agents, softeners and blowing agents in the case that the viscous polymer composition is a foam.

Activators can be inorganic or organic compounds. According to the present invention it is preferred that the viscous polymer composition contains a organic and an inorganic activator. Fatty acids are preferred organic activators, wherein sterenic acid is in particular preferred. Inorganic activators are in particular oxides of transition metals, wherein zinc oxide is in particular preferred.

Furthermore, it is preferred to add separating agents to the viscous polymer composition. The separating agents known to the person skilled in the art can be employed. In particular suitable are separating agents which are a salt of a fatty acid and a transition metal, wherein zinc stearate is in particular preferred.

Additionally, it is preferred to include softeners in the viscous polymer composition according to the present invention. Suitable softeners are known by the skilled person. Phthalates, adapenic acid ester and polyesters with rather low degree of polymerization are preferred. From these phthalates are in particular preferred, wherein di-octyl phthalate is in particular preferred in the viscous polymer composition according to the present invention.

If it is desired to obtain the viscous polymer composition as a foam, blowing agents can be used which are known to the person skilled in the art. Preferred blowing agents are halogen free carboxylic amides as for example the product ADC/K from Fa. Bayer AG or AC3000H.

The viscous polymer composition according to the present invention can be produced by a process, wherein the above mentioned components are brought into contact. Injection moulding is a preferred method for processing the polymer composition.

Furthermore, the viscous polymer composition according to the present invention is obtainable by bringing the above defined components into contact.

The viscous polymer composition according to the present invention comprises at least one of the following material properties:

An energy loss in the range of 50 to 80, preferably from 55 to 75 and more preferably from 60 to 70%,
a stiffness at 200 N to 400 N in the range of 80 to 150, preferably of 100 to 140 and more preferably of 110 to 130 N/mm,
a stiffness at 1000 N to 1500 N in the range of 100 to 400, preferably of 150 to 300 and more preferably of 170 to 270 N/mm,
a specific weight in the range of 0.3 to 0.8, preferably of 0.35 to 0.7 and more preferably of 0.4 to 0.45 g/cm$^3$,
an elasticity in the range of 1 to 30, preferably of 5 to 20 and more preferably of 7.5 to 15%.

The polymer composition according to the present invention can have all possible combinations of the single properties a) to e). Preferred property combinations of the viscous polymer composition according to the present invention are given in the following letter combinations: ab, abc, abcd, abcde, bc, de, ac, ad, ae, ace, be, bd, and ce. In particular preferred is a viscous polymer composition with all properties a) to e).

Furthermore, the invention is related to a composite, comprising or preferably consisting in a viscous polymer composition according to the present invention and an elastic material.

The elastic material of the composite has at least one of the following properties:

α) an energy loss of < 50, preferably < 30 and more preferably < 25%,

β) a stiffness at 200 N to 400 N in the range of > 150 to 300, preferably of 170 to 290 and more preferably of 190 to 280 N/mm,

χ) a stiffness at 1000 N to 1500 N in the range of > 400 to 700, preferably of 410 to 650 and more preferably of 430 to 600 N/mm,

δ) a specific weight in the range of 0.1 to 0.3, preferably of 0.15 to 0.28 and more preferably of 0.22 to 0.27 g/cm$^3$,

ε) an elasticity in the range of > 30 to 75, preferably of 40 to 70 and more preferably of 45 to 65%.

Preferably the elastic material of the composite can have the above defined properties α) to ε) in all possible combinations. The following combinations are more preferred:

αβ, αβχ, αβχδ, αβχδε, αχ, αδ, αε, βχ, βδ, βε, βχδ, βχβχδε, χδ, χε, χδε, δε. An elastic material in the composite with all the properties α) to ε) is most preferred.

In a preferred embodiment of the composite of the present invention the viscous polymer composition V1 and the elastic material V2 are directly adjacent to each other. This is in particular preferred when the composite only consists in the viscous polymer composition according to the present invention and the elastic material.

In another embodiment of the composite of the present invention the viscous polymer composition V1 and the elastic material V2 are separated at least in one part by at least one further material V3. Said composite preferably consists in the viscous polymer composition V1, the elastic material V2 and a further material V3. The elastic material V2 can be made of all suitable materials, in particular elastic polymers, known by the skilled person. The further material V3 differs from the viscous polymer composition V1 and the elastic material V2 in at least one material property, wherein the further material V3 preferably also differs with respect to its composition from the viscous polymer composition V1 and the elastic material V2.

Furthermore, the invention is related to a body, in particular a shoe sole, inlays for shoes, protectors, especially for elbow and shin, and shoulderpads, comprising, preferably consisting a viscous polymer composition or a composite according to the present invention.

Furthermore, the invention is rated to the use of a viscous polymer composition or a composite according to the present invention for producing of bodies, in particular shoe soles.

Above this, the viscous polymer composition according to the invention can be used to produce bodies in the whole area of healthcare and medical applications like for example health-shoes, orthopaedic shoes, orthopaedic inlays or elbow-pads.

The term body generally means forms, foils, fibers, films and coatings. Bodies are preferred in which the properties of the viscous polymer composition or the composite according to the invention or both are favorably applicable.

## 5. Brief description of the drawings

Preferred embodiments of the present invention are well described under reference of the following drawings, wherein it shows:

Fig. 1    The natural movement of the foot during running (Figures 1a to b) and the resulting GRF-force profile (Fig. 1c);

Fig. 2a    A force-time-diagram of two force fields, which are applied from a measuring device according to the present invention on the heel area and the front foot area of a sole unit according to the present invention or material layers, respectively, to determined the energy loss according to the present invention and the dynamic stiffness;

Fig. 2b    a measuring device according to the present invention used for applying the force profile according to Figure 2a and for measuring the resulting deformation (and thus the energy loss and the dynamic stiffness);

Fig. 2c    The force stamps used in a device according to Figure 2b for the heel area and the front foot area;

Fig. 3    the deformation behavior of a viscous material with a resulting energy loss (hatched) and the dynamic stiffness DS between 1 Kn and 1.5 K n;

Fig. 4    the deformation behavior of elastic material with the resulting energy loss (hatched) and the dynamic stiffness (DS between 1 Kn and 1.5 Kn);

Fig. 5    a sole layer according to the preferred embodiment of the present invention, wherein in the front foot area an elastic material is used and in the heel area a viscous material is used;

Fig. 6a    a cross-sectional view of an embodiment of the composite according to the present invention or a cut along the line A-A (or B-B, respectively), of the preferred embodiment shown in Figure 5; and

Fig. 6b    a cross-sectional view of an embodiment of the composite according to the present invention or a cut following the line A-A (or B-B, respectively), of the embodiment of Figure 5.

## 6. Detailed description of the preferred embodiments

The preferred embodiments of the present invention are now described by the drawings which are not limiting the scope of the invention.

Figure 1 depicts a human foot with a shoe 10 which essentially consists in a shaft 20 and a sole unit 50. As will be described in detail later, the sole 50 preferably consists in a plurality in layers which is further referred to as layer assembly.

To describe the principles according to the present invention, with regard to Figure 1 a foot in its natural movement by walking or running, respectively, is described in detail.

As shown in Figure 1a and in the introductory part, about 80% of humans start the movement by walking with contacting the heel area of a foot with the ground. In the moment of said contact a strong stroke is applied to the movement apparatus of the human. In the subsequent phase of the roll movement the applied force is reduced until the force increases in the moment of the push (reference is made to Figure 1b). Therefore, the force-time-diagram depicts a curve with two maximums.

If for proving the above consideration a test person proceeds the movement typical for running on a force-time-measuring platform, the force profile according to Figure 1c results. The ordinate shows that force equivalent (in a plurality of body weight) and the abscess shows the time in milliseconds. The diagram depicted in Figure 1c is a GRF-diagram (since the forces which are applied during a step on the foot are called ground reaction forces (GRF) as already shown in the introduction).

As shown in Figure 1c the GRF-curve has a first sharp maximum after 25 ms which results from a fast increasing force, which is equivalent to 2.5 times weight force as shown in the example of Figure 1c. As already addressed in the introduction, this maximum is also referred to as vertical force impact peak-value (VFIP-value). The phase in Figure 1c from T = 0 to T = A (approximately 30 to 35 ms) in the GFR-diagram is called passive phase. Said phase is related to the contact of the heel area of the foot on the ground (reference is made to Figure 1a).

After the passive phase of moving the so-called active phase follows in the GRF-diagram. The second force increase in the active phase results from the push of the foot from the ground (reference is made to Figure 1b). The stroke on the moving apparatus resulting from the active phase is much lower since a force appears slower compared to the active phase (approximately 60 to 70 ms). The GRF-diagram is strongly dependent from each single case and the conditions involved (running speed, anatomy of the foot, hardness of the ground, etc.).

Since the force increase of the passive phase occurs much faster as in the active phase, this results in a higher load of the heel, since the applied impulse (stroke) is comparably higher. Furthermore, by hitting a hard surface the impulse is "reflected" from the ground, so that the anatomy has to absorb said impulse. This yields, in particular during long lasting loads (example given marathon runs) to significant injuries or wear out, respectively.

Because of the smaller force impulse (longer force build up time) the load of the front foot area is lower. Furthermore, said front foot area has a bigger surface and an anatomic form, which allows a better absorption.

From his fact it was derived that the heel area needs better protection compared to the front foot area to avoid atomic damages. Since the forces in the front foot area occur slower, the foot is more capable to adapt to the increase of load (which is less here).

It is favorable for the front foot area that the sole has the property, wherein the component of the moving energy directing in the running direction is released as schematical energy in running direction and/or from the ground. Again, reference is made to Figure 1b in this respect. If during the contact of the front foot with a ground genetical energy is again transferred to the foot, this yields in a reflection of the foot from the ground and thus, supporting the forward movement.

The present invention is thus based on the result that in the heel area and in the front foot area of a sole unit materials with different properties should be used: In the front foot area it is preferred to use an elastic material. In contrast to this, it is preferred to use a material obtained from the viscous polymer composition according to the present invention in the heel area.

From the above consideration it becomes apparent that the polymer characterization and the of the viscous polymer composition and the elastic material the energy loss occurring deformation is in particular suitable. This property (measured in %) describes the ratio of the energy applied to the material over the occurring force field to the energy obtained by relaxation.

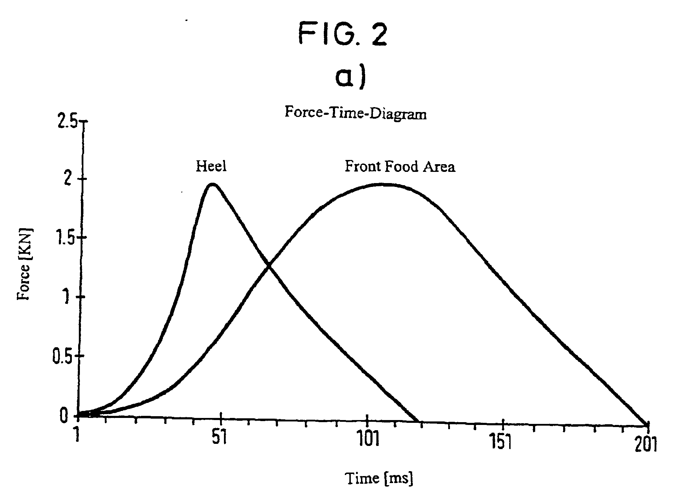

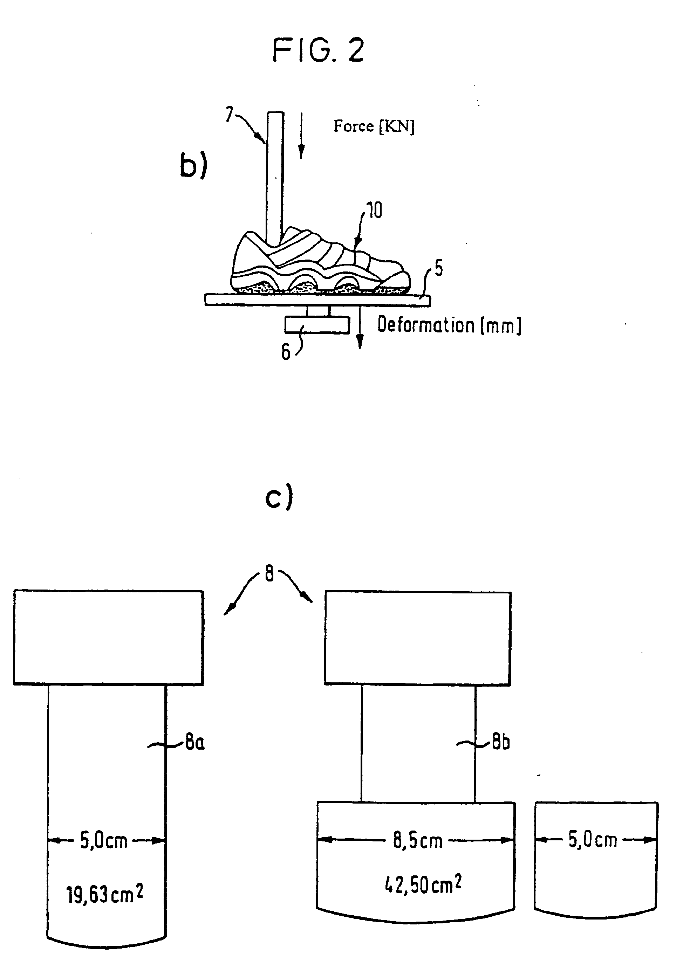

To determine the energy loss of suitable materials in the present invention the device according to Figure 2b is used. Said device consists in a platform 5, with the material to be measured thereon. Said material can be a single material layer (preferred) or - as shown - a sports shoe. In each case, it is preferred that the investigated material is used with the same thickness and in particular in one of the same form, in which it is used in the shoe later on. On the material to be measured a defined force field is applied by the stamp device 7 via a stamp 8(as to be described bellow) (compare Figure 2c). Below the platform 5 there is a (schematically depicted) measuring device 6 for measuring the deformation of the test materials (mm). The build up of the stamp device 7 and the measuring device 6 is well-known to the person skilled in the art. Besides the stamp 8 being described below such a device is commercially available under the name INSTRON UNIVERSALL 8502 of the company INSTRON Wolpert GmbH, Ulm.

The force field being implied by the stamp device 7 or stamp 8, respectively, has different profiles in the present invention for the test of the elastic and viscous materials to simulate reality as much as possible. Accordingly, for the testing of suitable viscous polymer a force field is applied, which is called "heel" in Figure 2a. To be as close to reality as possible, furthermore, stamp 8a is used. The geometry of said stamp is equivalent to the human heel. Stamp 8a has a circular cross-section with a diameter of 5 cm and a cross-sectional area at the lower end of 19.63 cm$^2$ (which is slightly curved). For measuring elastic materials, a force profile is used, which is referred to "front foot" in Figure 2a. The stamp 8b is in said measurements as adapted to the geometry of the human front foot. Stamp 8b has a lengthy form with a length of a 8.5 cm and is 5 cm broad. It is also (slightly curved). The lower side has a cross-sectional area of 42.50 cm$^2$. Finally, the materials are examined with a thickness which usually occurs in shoes (10 mm in the front foot area; 20 mm in the heel area).

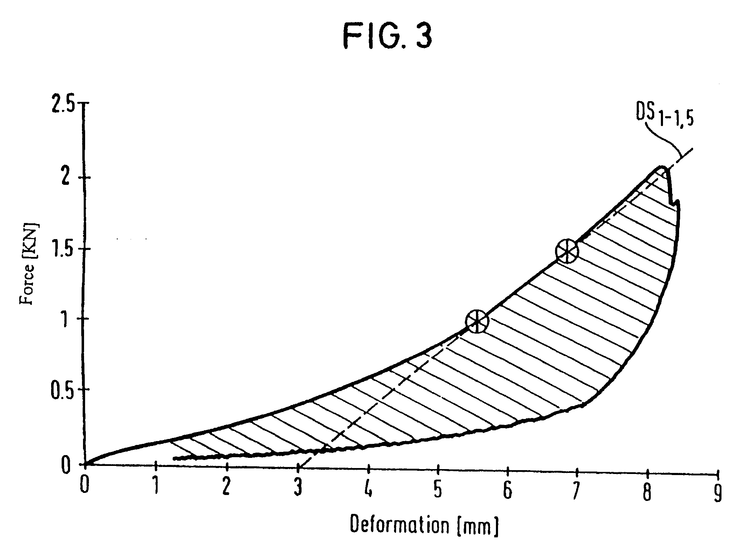

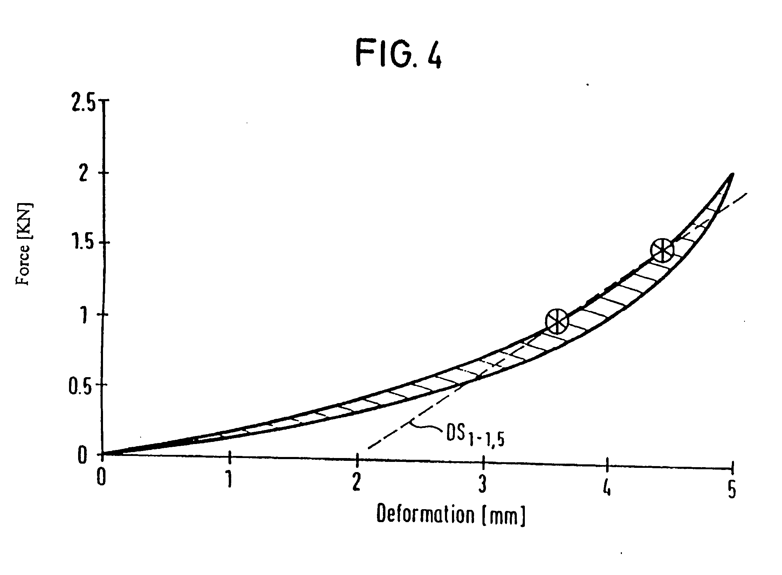

Below, with reference to Figures 3 and 4 the results obtained with the measuring devices 6 and 7 according to the present invention are discussed. In Figure 3 the deformation behavior of a viscous polymer composition is shown. Said deformation behavior is obtained with the device of Figure 2b and with a force profile "heel" in Figure 2a, wherein the abscesses shows the deformation measured with device 6 depending on the force field applied with stamp 7. Said Figure shows that the viscous polymer composition according to the present invention which is preferably used in the heel area shows a strong hysterese behavior. When the force according to the force profile "heel" as shown in Figure 2a, a deformation is obtained which relaxes slowly and with a significant lower counter force on stamp 8a. Said energy loss can be obtained graphical or numerical and is shown by the hatched area in the diagram. The diagram shows a significant part of the energy applied to the viscous polymer composition according to the present invention is changed into heat and is not available any more in the material when this relaxes to its original form.

The diagram from Figure 3 shows besides the energy loss a further parameter which is important for the present invention, i.e. the dynamic stiffness (DS) of the tested materials. The dynamic stiffens is defined as the ratio between the applied force F (N) and the resulting movement d (mm). Experiments have shown that with respect to sport shoes two areas of dynamic stiffness are of particular interest: The stiffness between 1000 N and 1500 N as well as the stiffness between 200 N and 400 N. Said ratios can be calculated as follows:

$$\text{Dynamic stiffness DS}_{1000\text{-}1500} = (F_{1500N} - F_{1000N}) / (d_{1500N} - d_{1000N}) \ [N/mm]$$

The value of dynamic stiffness between 200 N and 400 N can be also calculated according to the above equation. Said value is not shown graphically in Figure 3.

The dynamic stiffness is according to the present invention of interest of a sole unit which is a layer assemble (i.e. a plurality of layers from different materials). This of course is one preferred embodiment of the composite according to the present invention. Said assemblies (for example given with an inner layer, a middle layer which can comprise a function layer and an outer sole) show the above described effect according to the present invention only if the stiffness of the function layer is not higher than the stiffness of the materials of which the layers are made.

Figure 4 shows the behavior of a preferred elastic material. As is shown in Figure 4, the elastic material only shows a weak histerese behavior and thus only a very small energy loss. The material relaxes almost simultaneously when the force is reduced, wherein almost all the energy provided by force stamp 8b is released. The value for a dynamic stiffness between 1500 N and 1000 N is shown (the corresponding value for the dynamic stiffness between 400 N and 200 N is again not shown).

It becomes apparent that for field sports (basketball, volleyball, soccer) the dynamic stiffness between 1000 N and 1500 N should be lower as 600 N/mm for the elastic material and less than 250 N/mm for the viscous polymer composition.

However, for running shoes the dynamic stiffness of the elastic material between 1000 N and 1500 N should be less than 450 N/mm and the dynamic stiffness for the viscous polymer composition should be less than 200 N/mm.

For a shoe for universal application a good compromise is: The dynamic stiffness of the elastic materials between 1000 N and 1500 N should be less than 600 N/mm and between 200 N and 400 N less than 300 N/mm. The dynamical stiffness of the viscous polymer composition between 1000 N and 1500 N should be less than 250 N/mm and between 200N and 400N less than 130 N/mm.

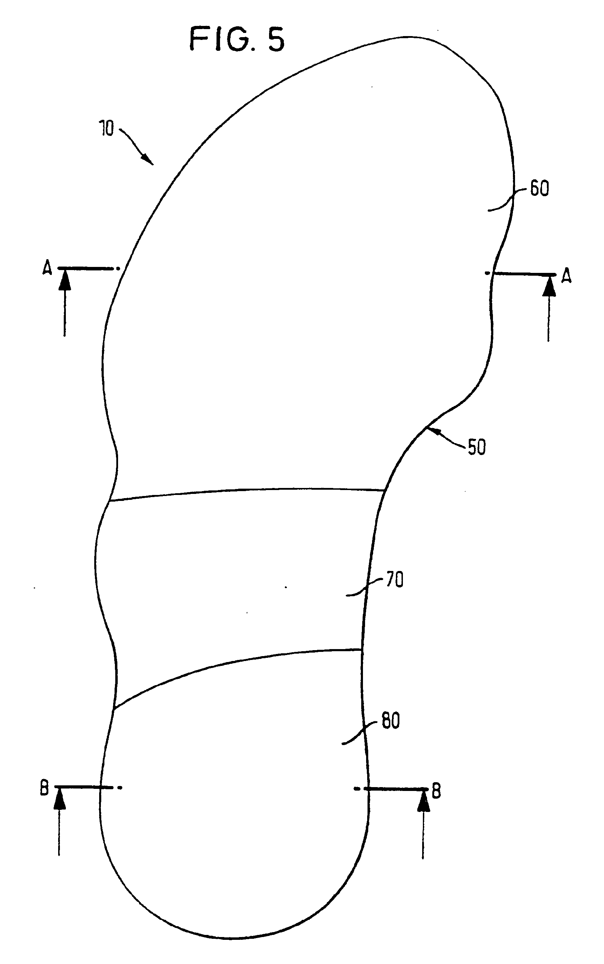

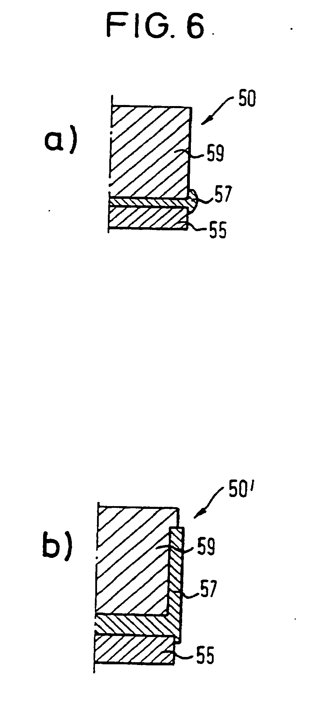

Taking the above materials into account, Figures 5 and 6 show preferred embodiments of soles according to the present invention.

Figure 5 is a horizontal cut through a sole according to the present invention. There is a running sole 50 of a shoe 10 shown which is divided in a front foot area 60 and a heel area 80. The sole 50 itself can be a plurality of single layers as it is usually the case for sport shoes. For example, the sole can consist in an outer sole 55 and a middle sole 59 and not shown in a sole (compare Figure 6a).

In a preferred embodiment according to the present invention there is between the outer sole 55 and the middle sole 59 a function layer 57. Said function layer 57 can be divided in two horizontal areas, i.e. the front foot area 60 with elastic material and the heel area 80 with the viscous polymer composition. Between said two horizontal areas there can be a transition area 70. The front foot area 60 and the heel area 80 can also be in contact.

According to an alternative embodiment of the present invention (not shown) also two functional layers 57 can be present. In such a case the first function layer in the front foot area comprises the elastic material and the second function layer in the heel layer comprises the viscous polymer composition.

As shown in Figures 6a and 6b, the functional layer 57 can extend a little bit or a lot towards middle sole 59 (Figure 6a). This depends on the application of the sport shoes. In cases, where the probability of the laterally hitting the ground is high (sports with jumps) the embodiment according to Figure 6b is preferred. However, the embodiment according to Figure 6a is for example applied to running shoes.

**Claims**

**1.** Viscous polymer composition, comprising a component

D) a bromine comprising polymer D, obtainable from at least one $C_4$ - to $C_{10}$-diene and at least one bromine; and at least one of the components:

A) a polymer A, obtainable of at least a

A1) $C_4$- to $C_{10}$-diene as monomer A1 and
A2) vinylaromatic $C_8$ - to $C_{20}$-monomer as a monomer A2;

*wherein the polymer A is a block copolymer and wherein in polymer A a block obtainable from monomer A1 is surrounded from the blocks of polymer A2;*
or
B) a polymer B, obtainable of at least

B1) $C_2$ - to $C_{20}$-olefin as a monomer B1 and
B2) a monomer from a $C_2$ - to $C_{10}$-vinylalcohol and $C_2$ - to $C_{10}$-carboxylic acid as monomer B2;

optionally

C) a polymer C, obtainable from at least one vinylaromatic monomer; and
E) a filler.

**2.** Polymer composition according to claim 1, comprising as component:

A) 0 to 99.9 wt-% polymer A,
B) 0 to 99.9 wt-% polymer B,
C) 0 to 99.9 wt-% polymer C,
D) 5 to 50 wt-% polymer D,
E) 0 to 40 wt-% fillers as component E,

wherein the sum of component A to E yields 100 wt-% wherein the polymer composition always contains at least one of the two components A and B and if it contains A or B, it contains at least one further component C to E.

**3.** Polymer composition according to one of the claims 1 to 2, wherein E is a silicon oxygen compound.

4. Process for producing a polymer composition, wherein the components, defined in one of the claims 1 to 3 are brought into contact with each other.

5. Polymer composition, obtainable by bringing into contact the components defined in one of the claims I to 3.

6. Polymer composition according to one of the claims 1 to 3 and 5 with at least one of the following properties:

a) energy loss in the range of 50 to 80%,
b) stiffness at 200 N to 400 N in the range of 80 to 150 N/mm,
c) stiffness at 1000 N to 1500 N in the range of 100 to 400 N/mm,
d) specific weight in the range of 0.3 to 0.8 g/cm$^3$ .
e) Elasticity in the range of 1 to 30%.

7. Composite, comprising

V1) a polymer composition according to one of the claims 1 to 3, 5 and 6;
and
V2) an elastic material with at least one of the following properties:

$\alpha$) energy loss < 50%,
$\beta$) stiffness at 200 N to 400 N in the range of > 150 to 300 N/mm,
$\gamma$) stiffness at 1000 N to 1500 N in the range of > 400 to 700 N/mm,
$\delta$) specific weight in the range of 0.1 to <0.3 g/cm$^3$,
$\varepsilon$) elasticity in the range of > 30 to 75 %.

8. Bodies, in particular shoe soles, comprising a polymer composition according to one of the claims 1 to 3, 5 and 6 or a composite according to claim 7.

9. Use of a polymer composition according to one of the claims 1 to 3, 5 and 6 or a composite according to claim 7 for producing bodies, in particular shoe soles.

**Patentansprüche**

1. Viskosekunststoffzusammensetzung, aufweisend eine Komponente

D) eines Bromin aufweisenden Polymers D, erhältlich aus zumindest einem $C_4$ - bis $C_{10}$-Dien; und zumindest einem Bromin; und zumindest eine der Komponenten:

A) ein Polymer A, erhältlich aus zumindest einem

A1) $C_4$- bis $C_{10}$-Dien als Monomer A1 und
A2) vinylaromatisches $C_8$ - bis $C_{20}$-Monomer als ein Monomer A2;

wobei das Polymer A ein Block-Copolymer ist, und wobei im Polymer A ein Block, erhältlich aus dem Monomer A1, umgeben ist von den Blöcken von Polymer A2;
oder
B) ein Polymer B, erhältlich aus zumindest

B1) $C_2$ - bis $C_{20}$-Olefin als ein Monomer B 1 und
B2) ein Monomer aus einem $C_2$ - bis $C_{10}$-Vinylalkohol and $C_2$ - bis $C_{10}$-Karbonsäure als Monomer B2;

wahlweise

C) ein Polymer C, erhältlich aus zumindest einem vinylaromatischen Monomer; und
E) ein Füller.

2. Kunststoffzusammensetzung nach Anspruch 1, aufweisend als Komponente:

A) 0 bis 99.9 Gew.-% Polymer A,
B) 0 bis 99.9 Gew.-% Polymer B,
C) 0 bis 99.9 Gew.-% Polymer C,
D) 5 bis 50 Gew.-% Polymer D,
E) 0 bis 40 Gew.-% Füller als Komponente E,

wobei die Summe von Komponente A bis E 100 Gew.-% ergibt, wobei die Kunststoffzusammensetzung immer mindestens eine der zwei Komponenten A and B enthält und falls sie A oder B enthält, enthält sie mindestens eine weitere Komponente C bis E.

3. Kunststoffzusammensetzung nach einem der Ansprüche 1 bis 2, wobei E eine Silizium-Sauerstoff-Mischung ist.

4. Verfahren zum Herstellen einer Kunststoffzusammensetzung, wobei die Komponenten, die in einem der Ansprüche 1 bis 3 definiert sind, miteinander in Kontakt gebracht werden.

5. Kunststoffzusammensetzung, erhältlich durch zueinander in Kontakt bringen der Komponenten, die in einem der Ansprüche 1 bis 3 definiert sind.

6. Kunststoffzusammensetzung nach einem der Ansprüche 1 bis 3 und 5, mit mindestens einer der folgenden Eigenschaften:

a) Energieverlust im Bereich von 50 bis 80%,
b) Steifigkeit bei 200 N bis 400 N im Bereich von 80 bis 150 N/mm,
c) Steifigkeit bei 1000 N to 1500 N im Bereich von 100 bis 400 N/mm,
d) spezifisches Gewicht im Bereich von 0.3 bis 0.8 g/cm$^3$,
e) Elastizität im Bereich von 1 bis 30%.

7. Verbundwerkstoff, aufweisend:

V1) eine Kunststoffzusammensetzung nach einem der Ansprüche 1 bis 3, 5 und 6;
und
V2) ein elastisches Material mit zumindest einer der folgenden Eigenschaften:

α) Energieverlust < 50%,
β) Steifigkeit bei 200 N bis 400 N im Bereich von > 150 bis 300 N/mm,
γ) Steifigkeit bei 1000 N bis 1500 N im Bereich von > 400 bis 700 N/mm,
δ) spezifisches Gewicht im Bereich von 0.1 bis <0.3 g/cm$^3$,
ε) Elastizität im Bereich von > 30 bis 75 %.

8. Körper, insbesondere Schuhsohlen, aufweisend eine Kunststoffzusammensetzung nach einem der Ansprüche 1 bis 3, 5 und 6 oder einem Verbundwerkstoff entsprechend Anspruch 7.

9. Verwendung einer Kunststoffzusammensetzung nach einem der Ansprüche 1 bis 3, 5 und 6 oder eines Verbundwerkstoffs nach Anspruch 7 zum Herstellen von Körpern, insbesondere Schuhsohlen.

**Revendications**

1. Composition polymère visqueuse, comprenant un composant :

D) un polymère D comprenant du brome, apte à être obtenu à partir d'au moins un diène en C$_4$ à C$_{10}$ et d'au moins un brome et d'au moins un des composants :

A) un polymère A, apte à être obtenu avec au moins :

A1) un diène en C$_4$ à C$_{10}$ comme monomère A1 et
A2) un monomère vinylaromatique en C$_8$ à C$_{20}$ comme monomère A2 ;

dans laquelle le polymère A est un copolymère séquence et dans laquelle dans le polymère A une séquence apte à être obtenue à partir du monomère A1 est entourée des séquences de polymère A2;
ou
B) un polymère B, apte à être obtenu à partir d'au moins :

B1) une oléfine en $C_2$ à $C_{20}$ comme monomère B1 et
B2) un monomère d'alcool vinylique en $C_2$ à $C_{10}$ et d'acide carboxylique en $C_2$ à $C_{10}$ comme monomère B2 ; éventuellement

C) un polymère C, apte à être obtenu à partir d'au moins un monomère vinylaromatique ; et
E) une charge.

2. Composition polymère selon la revendication 1, comprenant comme composant :

A) 0 à 99,9 % en poids de polymère A,
B) 0 à 99,9 % en poids de polymère B,
C) 0 à 99,9 % en poids de polymère C,
D) 5 à 50 % en poids de polymère D,
E) 0 à 40 % en poids de charges comme composant E,
dans laquelle la somme des composants A à E donne 100 % en poids dans laquelle la composition polymère renferme toujours au moins l'un des deux composants A et B et si elle contient A ou B, elle renferme au moins un autre composant C à E.

3. Composition polymère selon l'une des revendications 1. à 2, dans laquelle E est un composé d'oxygène siliconé.

4. Procédé d'obtention d'une composition polymère, dans lequel les composants, définis dans l'une des revendications 1 à 3, sont amenés en contact l'un avec l'autre,

5. Composition polymère, apte à être obtenue en amenant en contact les composants définis dans l'une des revendications 1 à 3.

6. Composition polymère selon l'une des revendications 1 à 3 et 5, avec au moins l'une des propriétés suivantes :

a) une perte d'énergie dans la gamme de 50 à 80 %,
b) une rigidité sous 200 N à 400 N dans la gamme de 80 à 150 N/mm,
c) une rigidité sous 1 000 N à 1 500 N dans la gamme de 100 à 400 N/mm,
d) un poids spécifique dans la gamme de 0,3 à 0,8 g/cm$^3$,
e) une élasticité dans la gamme de 1 à 30 %.

7. Composite, comprenant :

V1) une composition polymère selon l'une des revendications 1 à 3 et 5 et 6 ; et
V2) un matériau élastique avec au moins l'une des propriétés suivantes :

α) une perte d'énergie < 50 %,
β) une rigidité sous 200 N à 400 N dans la gamme de >150 à 300 N/mm,
γ) une rigidité sous 1 000 N à 1 500 N dans la gamme de > 400 à 700 N/mm,
δ) un poids spécifique dans la gamme de 0,1 à < 0,3 g/cm$^3$,
ε) une élasticité dans la gamme de > 30 à 75 %.

8. Corps, en particulier semelles de chaussures, comprenant une composition polymère selon l'une des revendications 1 à 3, 5 et 6 ou un composite selon la revendication 7.

9. Utilisation d'une composition polymère selon l'une des revendications 1 à 3, 5 et 6 ou d'un composite selon la revendication 7 pour produire des corps, en particulier des semelles de chaussures.

# FIG. 1

a)

b)

EP 1 268 663 B1

# FIG. 1

## c)

# FIG. 2
## a)

Force-Time-Diagram

# FIG. 2

b)

Force [KN]

Deformation [mm]

c)

5,0 cm

19,63 cm$^2$

8,5 cm

42,50 cm$^2$

5,0 cm

# FIG. 3

FIG. 4

# FIG. 5

# FIG. 6

a)

b)